# EUROPEAN PATENT APPLICATION

(11) **EP 4 488 894 A1**
(43) Date of publication of application: **08.01.2025**
(21) Application number: 22929839.3
(22) Date of filing: 04.03.2022
(51) Int. Cl.: G06N 99/00

(54) **COMPUTATION METHOD, COMPUTATION PROGRAM, AND INFORMATION PROCESSING DEVICE**

(71) Applicant: FUJITSU LIMITED, Kawasaki-shi, Kanagawa 211-8588 (JP)
(72) Inventor: HASOME, Ayano, Kawasaki-shi, Kanagawa 211-8588 (JP); YAMAZAKI, Takashi, Kawasaki-shi, Kanagawa 211-8588 (JP); MARUO, Akito, Kawasaki-shi, Kanagawa 211-8588 (JP)
(74) Representative: Haseltine Lake Kempner LLP
(86) International application number: PCT/JP2022/009337
(87) International publication number: WO 2023/166695

(57) **Abstract**

In an arithmetic method, a computer executes: first processing of repeating generation evolution by a first optimization algorithm that causes generation evolution by a genetic algorithm such that an objective function satisfies a predetermined condition by giving variations to an input variable for each individual; and second processing of repeating generation evolution by a second optimization algorithm that repeats to give variations to an input variable for each individual after a predetermined generation obtained by the first processing to obtain an individual a plurality of times, and causes generation evolution by a genetic algorithm such that a statistical value of an objective function of each individual obtained satisfies a predetermined condition.

## Description

### TECHNICAL FIELD

The present case is related to an arithmetic method, an arithmetic program, and an information processing device.

### BACKGROUND ART

In fields of various industries, optimization problems to obtain good effects exist. For these optimization problems, an optimization algorithm for obtaining an exact solution that achieves a highest effect in calculation has been studied.

### CITATION LIST

### NON-PATENT DOCUMENT

Non-Patent Document 1: Z. Xue, and F. Pedroso de Lima: Robust Design Optimization on an Inline Three-Cylinder Engine Balance Shaft with Many Stochastic Variables. SAE Technical Paper, 12 (2019) 2019-01-0329

Non-Patent Document 2: S. Tsutsui: Genetic Algorithms with a Robust Solution Searching Scheme. IEEE transactions on Evolutionary Computation, 1 (1997) 201-208

### SUMMARY OF INVENTION

### TECHNICAL PROBLEM

However, in an actual field, work may not be performed according to an exact solution. In this case, there is a possibility that an effect that is supposed to be obtained with the exact solution is greatly reduced. Therefore, a highly robust optimization algorithm has been studied (see, for example, Non-Patent Documents 1 and 2).

However, in a method described in Non-Patent Document 1, a calculation time monotonically increases as the number of sampling points increases. Therefore, it is difficult to obtain an optimal solution in a practical calculation time. On the other hand, in a method described in Non-Patent Document 2, since an evaluation value of one sampling point greatly affects selection of a solution, a position of a Pareto solution calculated as an optimal solution tends to be overestimated.

In one aspect, an object of the present invention is to provide an arithmetic program, an arithmetic method, and an information processing device that may obtain a highly effective optimal solution while suppressing a calculation time.

### SOLUTION TO PROBLEM

In one aspect, in an arithmetic method, a computer executes: first processing of repeating generation evolution by a first optimization algorithm that causes generation evolution by a genetic algorithm such that an objective function satisfies a predetermined condition by giving variations to an input variable for each individual; and second processing of repeating generation evolution by a second optimization algorithm that repeats to give variations to an input variable for each individual after a predetermined generation obtained by the first processing to obtain an individual a plurality of times, and causes generation evolution by a genetic algorithm such that a statistical value of an objective function of each individual obtained satisfies a predetermined condition.

### ADVANTAGEOUS EFFECTS OF INVENTION

It is possible to obtain a highly effective optimal solution while suppressing a calculation time.

### BRIEF DESCRIPTION OF DRAWINGS

FIG. 1 is a diagram illustrating an optimization result for arrangement of products in a packaging box.
FIG. 2A is a functional block diagram representing an overall configuration of an information processing device according to a first embodiment, and FIG. 2B is a block diagram illustrating a hardware configuration of each unit of the information processing device.
FIG. 3A is a diagram illustrating a model of the packaging box, FIG. 3B is a diagram illustrating product information stored in a storage unit, and FIG. 3C is a diagram illustrating an exact solution.
FIG. 4 is a diagram illustrating a flowchart for obtaining an optimal solution by a MORDO method.
FIG. 5 is a diagram illustrating arithmetic results in an optimization method without considering variations and arithmetic results in the MORDO method.
FIG. 6 is a diagram illustrating a result of representing variance of Pareto solutions by bubble sizes.
FIG. 7 is a diagram illustrating a flowchart for obtaining an optimal solution by a Robust GA method.
FIG. 8 is a diagram illustrating arithmetic results in the MORDO method and arithmetic results in the Robust GA.
FIG. 9 is a diagram illustrating a result of representing variance of Pareto solutions by bubble sizes.
FIG. 10 is a flowchart representing an example of processing executed by the information processing device.
FIG. 11 is a diagram illustrating arithmetic results in the Robust GA method and arithmetic results in a Hybrid method according to the present embodiment.
FIG. 12 is a diagram illustrating a result of representing variance of Pareto solutions by bubble sizes.
FIG. 13 is a diagram illustrating two types of test cases (a case 1 and a case 2) in which initial arrangement of boxing is changed.
FIG. 14 is a diagram illustrating a modification.
FIG. 15 is a diagram for describing an example in which a result output by a result output unit is output to an operation device.

### DESCRIPTION OF EMBODIMENTS

Before describing an embodiment, an outline of an optimization algorithm will be described.

Optimization problems exist in fields of various industries including a distribution industry and a manufacturing industry. For these problems, an optimization algorithm for obtaining an exact solution that achieves a highest effect in calculation has been studied.

Here, the exact solution is a solution having a highest evaluation index. For example, in a production line, the evaluation index includes a production completion time, a delivery time, a production cost, and the like. In boxing work, the evaluation index is a waste material amount, a working time, and the like. The optimization algorithm is an algorithm that uses one or more evaluation indexes as an objective function and performs optimization such that the objective function becomes favorable. Note that, in the production line, input variables are conditions such as a working time needed for each product in addition to initial order of input of products into the production line. In the boxing work, input variables are conditions such as a size of each product, a weight of each product, and a size of a box, in addition to initial order of boxing of products. A solution to be obtained is order of input of the products into the production line, or the like. In the boxing work, a solution to be obtained is boxing order of the products, or the like.

In the optimization algorithm, an exact solution having the highest evaluation index may be obtained. However, when an attempt is made to apply the exact solution obtained by these optimization algorithms to a field, since various variations may occur in the actual field, it is difficult to perform work according to the exact solution, and as a result, it is conceivable that work content is slightly deviated from the exact solution.

Here, an exact solution obtained by a conventional method is often a solution that may locally obtain a high effect. Therefore, it is conceivable that, when work content deviates from the exact solution (= tolerance occurs), an effect is drastically reduced, and an assumed effect may not be obtained.

For example, in the boxing work, phenomena are conceivable in which a time needed for work becomes long due to a difference in a skill level of a worker, packing work according to the exact solution may not be performed due to a size error of a product handled in the work, and the like. These phenomena may occur in an actual field. When these phenomena occur, the work content deviates from the exact solution.

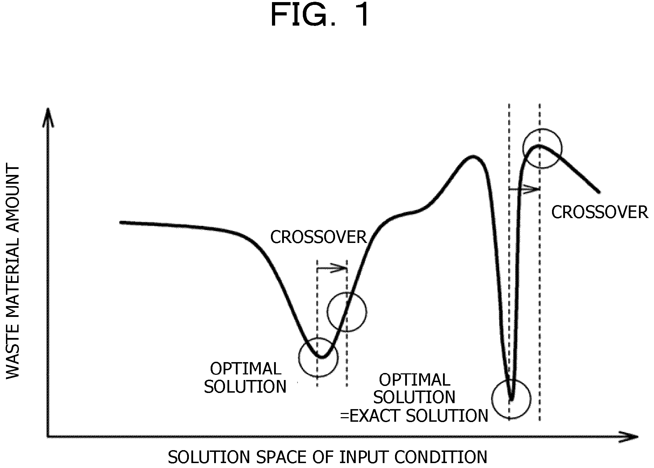

FIG. 1 is a diagram illustrating an optimization result for arrangement of products in a packaging box. A waste material amount may be reduced by packing the products into the packaging box without any gap. Therefore, it is conceivable to obtain an optimal solution of boxing of the products in the packaging box by the optimization algorithm. FIG. 1 is a diagram illustrating the optimal solution. In FIG. 1, a horizontal axis indicates a solution space of an input condition, and a vertical axis indicates the waste material amount. In the example of FIG. 1, evaluation is performed with one evaluation index of the waste material amount.

For example, an optimal solution on a right side of FIG. 1 is an exact solution because the waste material amount may be most reduced. With this exact solution, the waste material amount may be greatly reduced, but since the solution exists locally, the waste material amount is greatly increased only when work content is slightly deviated from the exact solution. On the other hand, in an optimal solution on a left side, the waste material amount is not reduced as much as the exact solution, but the solution does not exist locally (a difference in the waste material amount from a neighborhood solution is small) as compared with the exact solution. Therefore, even when the work content slightly deviates from the optimal solution, the waste material amount is not greatly increased. In an actual field, there is a demand for a highly robust optimization algorithm that may obtain an effect close to an optimal solution even when work content deviates from the optimal solution.

### [First Embodiment]

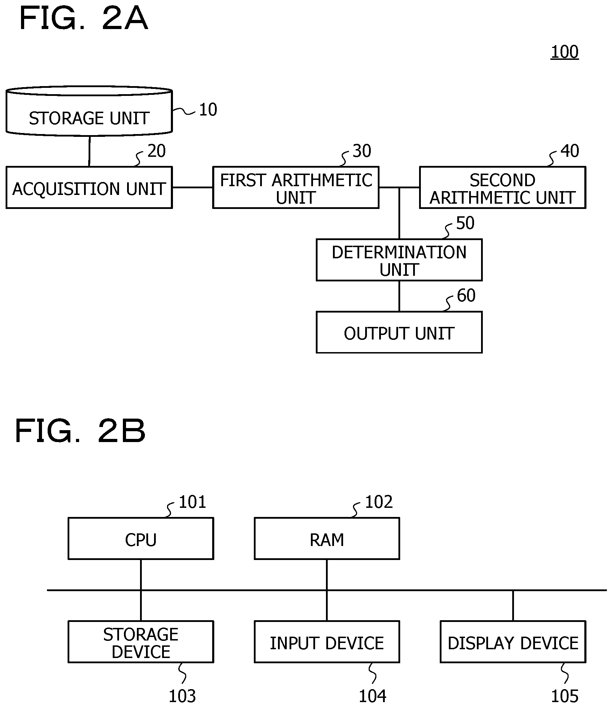

FIG. 2A is a functional block diagram representing an overall configuration of an information processing device 100 according to a first embodiment. The information processing device 100 is a server for optimization processing, or the like. As illustrated in FIG. 2A, the information processing device 100 includes a storage unit 10, an acquisition unit 20, a first arithmetic unit 30, a second arithmetic unit 40, a determination unit 50, an output unit 60, and the like. In the first embodiment, optimization in boxing work will be described as an example.

FIG. 2B is a block diagram illustrating a hardware configuration of each unit of the information processing device 100. As illustrated in FIG. 2B, the information processing device 100 includes a CPU 101, a RAM 102, a storage device 103, an input device 104, a display device 105, and the like.

The central processing unit (CPU) 101 is a central processing unit. The CPU 101 includes one or more cores. The random access memory (RAM) 102 is a volatile memory that temporarily stores a program to be executed by the CPU 101, data to be processed by the CPU 101, and the like. The storage device 103 is a nonvolatile storage device. As the storage device 103, for example, a read only memory (ROM), a solid state drive (SSD) such as a flash memory, a hard disk to be driven by a hard disk drive, or the like may be used. The storage device 103 stores an arithmetic program. The input device 104 is an input device such as a mouse or a keyboard. Alternatively, the input device 104 is an interface such as an external memory such as a USB memory. The display device 105 is a device that displays a processing result of the information processing device 100 or the like, and is a display or the like. Each unit of the information processing device 100 is implemented by the CPU 101 executing the arithmetic program. Note that hardware such as a dedicated circuit may be used as each unit of the information processing device 100.

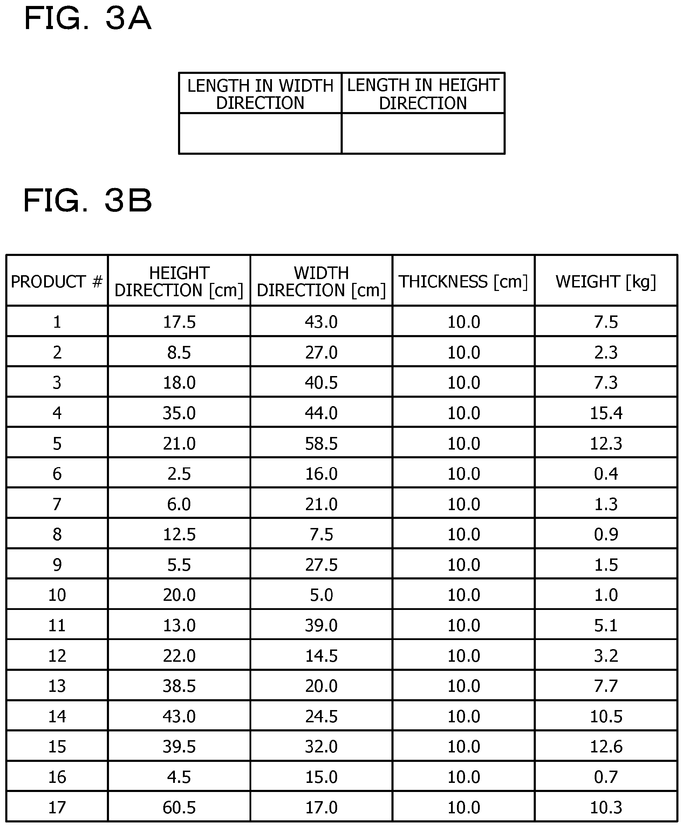

The storage unit 10 stores a model of a packaging box. FIG. 3A is a diagram illustrating the model of the packaging box. As illustrated in FIG. 3A, the storage unit 10 stores a shape of a bottom surface (length in width direction × length in height direction) of the packaging box. A worker faces any one side of the bottom surface of the packaging box when facing the packaging box. The width direction of the packaging box indicates a direction in which the one side that the worker is facing extends. The height direction of the packaging box indicates a direction in which adjacent sides perpendicular to the one side that the worker is facing extend and is a direction away from the worker (depth direction).

Furthermore, the storage unit 10 stores product information regarding products to be arranged in the packaging box in order. FIG. 3B is a diagram illustrating the product information stored in the storage unit 10. In the example of FIG. 3B, product information regarding 17 products is stored. Each product is substantially hexahedral. As illustrated in FIG. 3B, each product is denoted with a product number, and moreover, is associated with a shape (length in height direction × length in width direction × thickness) and a weight of the product.

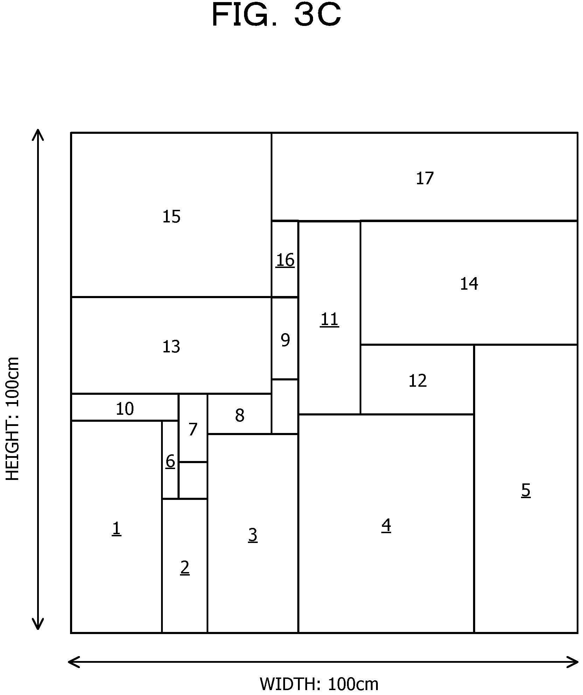

FIG. 3C is a diagram illustrating an exact solution that may most reduce a gap and most reduce a waste material amount for each product of FIG. 3B. As illustrated in FIG. 3C, the products 1 to 17 are arranged in the packaging box without any gap, and the height formed by all the boxed products is small. In this case, while the waste material amount may be greatly reduced, when crossover occurs in a product size, work may not be performed according to the exact solution. Therefore, it is desirable to use a highly robust optimization method.

Here, a multi-objective robust design optimization (MORDO) method will be described as the highly robust optimization method. The MORDO method is a method of repeating arithmetic operations by multiplexing variations by a Monte Carlo method. Specifically, the MORDO method is a method of preparing a solution in which variations are given to an input variable, and obtaining an optimal solution by using a statistical value such as an average value or a standard deviation obtained by a variable to which variations are repeatedly given at a time of evaluation of an optimization arithmetic operation as an objective function.

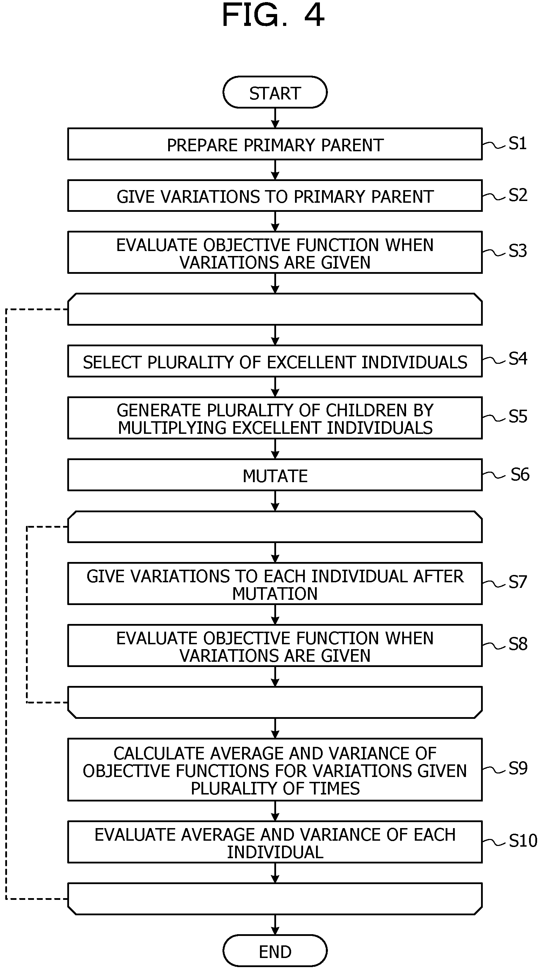

FIG. 4 is a diagram illustrating a flowchart for obtaining an optimal solution by the MORDO method. As illustrated in FIG. 4, first, a primary parent is prepared (step S1). The parent is an initial solution.

Next, variations are given to the primary parent using Gaussian noise or the like (step S2). For example, a plurality of types of variations is generated. For example, for a product shape of each piece of the product information stored in the storage unit 10, a size of 1% increase, a size of 2% increase, a size of 1% decrease, a size of 2% decrease, or the like is generated as each variation.

Next, an objective function of each individual corresponding to each variation when the variations are given to the primary parent is evaluated (step S3). In other words, an objective function of a solution obtained for each variation value is evaluated.

Next, a plurality of excellent individuals whose objective functions satisfy predetermined conditions is selected (step S4). Next, a plurality of children is generated by multiplying the excellent individuals (step S5). Next, the plurality of children is mutated (step S6).

Next, variations are given to each individual after the mutation using the Gaussian noise (step S7). The variations are similar to those in step S2. Next, an objective function of each individual corresponding to each variation when the variations are given to each individual after the mutation is evaluated (step S8). By executing steps S7 and S8 a plurality of times, it is possible to give variations to each individual the plurality of times. After steps S7 and S8 are executed the plurality of times, an average value and variance of the objective functions of each individual are calculated for the variations given the plurality of times (step S9). Next, the average value and the variance of each individual are evaluated (step S10). Thereafter, the processing is again executed from step S4. After the processing from step S4 to step S10 is repeated a predetermined number of times, the execution of the flowchart ends.

In this manner, a solution having a high evaluation value is finally calculated as an optimal solution. In the MORDO method, a sufficient number of sampling points are repeatedly evaluated in the vicinity of an input variable, so that a highly robust solution may be obtained.

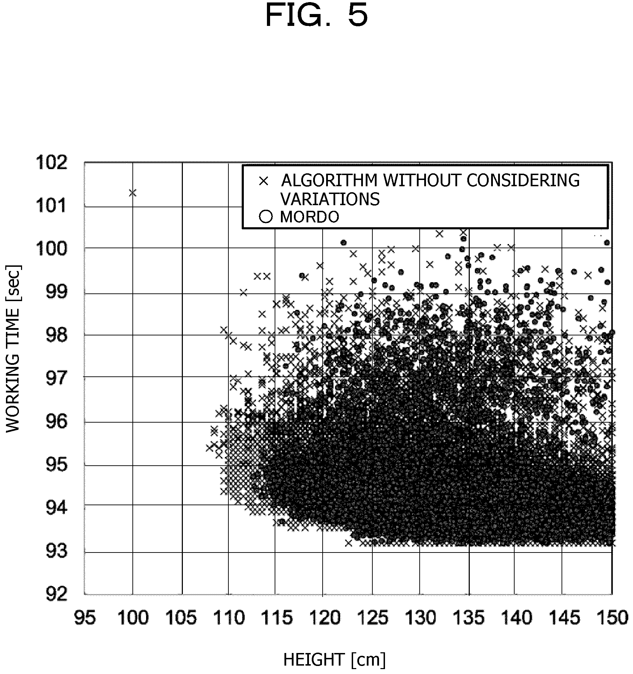

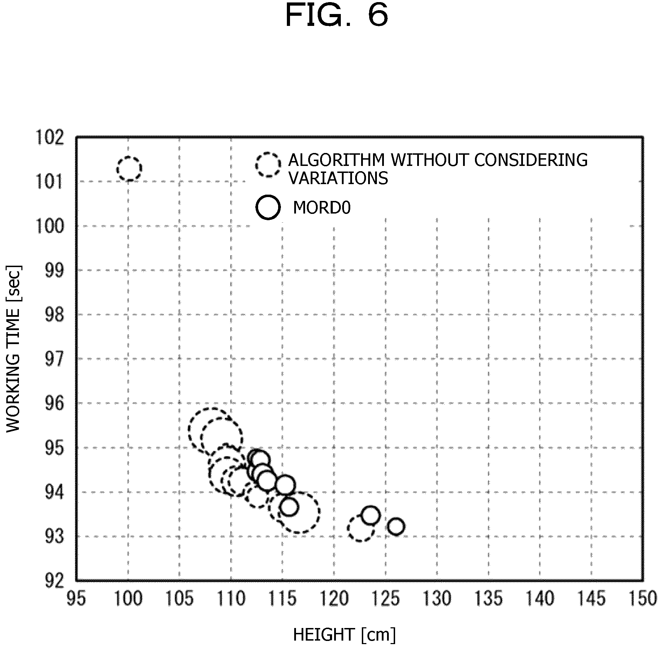

FIG. 5 is a diagram illustrating arithmetic results in an optimization algorithm without considering variations and arithmetic results in the MORDO method. Each plot in FIG. 5 indicates an evaluation index value for each arrangement order. In the example of FIG. 5, a height formed by all boxed products and a working time are used as the evaluation index values. FIG. 6 is a diagram illustrating a result of representing variance of Pareto solutions by bubble sizes. As illustrated in FIGs. 5 and 6, in the MORDO method, although a position of a Pareto front is slightly retracted as compared with the optimization algorithm without considering variations, variance of the solutions is small, and highly robust solutions may be obtained.

However, in the MORDO method, a calculation time monotonically increases as the number of sampling points increases. Therefore, in an optimization problem in which "finite element method analysis" or the like in which a calculation cost of an evaluation value of one time is high is used as a solver, it is difficult to obtain an optimal solution in a practical calculation time by the MORDO method.

Next, as another highly robust optimization method, a robust genetic algorithm (Robust GA) method will be described. The Robust GA method is a method of performing generation evolution by using a genetic algorithm (GA) in an optimization engine and generating variations for each evaluation of generation evolution by the genetic algorithm.

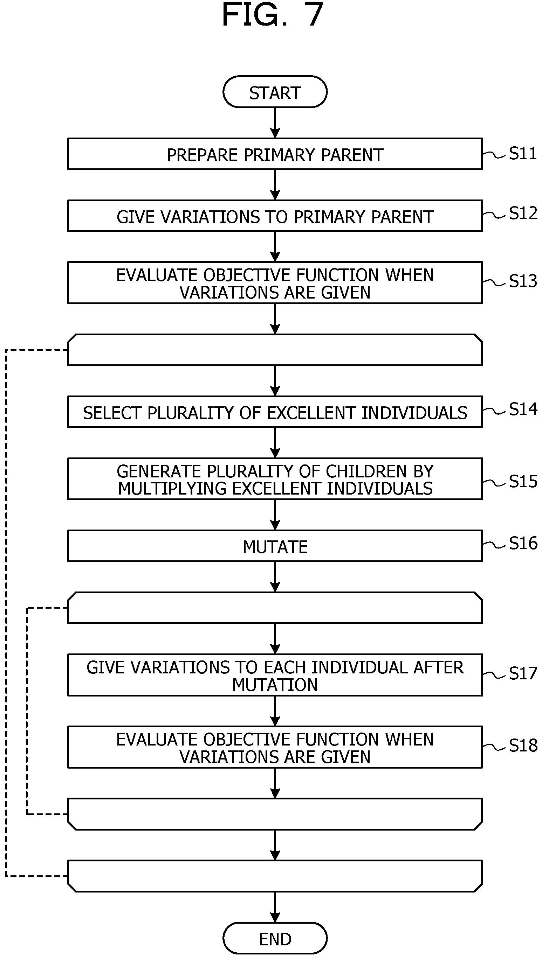

FIG. 7 is a diagram illustrating a flowchart for obtaining an optimal solution by the Robust GA method. As illustrated in FIG. 7, first, a primary parent is prepared (step S11). Next, variations are given to the primary parent using the Gaussian noise (step S12). The variations are similar to those in step S2 in FIG. 4. Next, an objective function of each individual corresponding to each variation when the variations are given to the primary parent is evaluated (step S13).

Next, a plurality of excellent individuals whose objective functions satisfy predetermined conditions is selected (step S14). Next, a plurality of children is generated by multiplying the excellent individuals (step S15). Next, the plurality of children is mutated (step S16) .

Next, variations are given to each individual after the mutation using the Gaussian noise (step S17). The variations are similar to those in step S12. Next, an objective function of each individual corresponding to each variation when the variations are given to each individual after the mutation is evaluated (step S18). Thereafter, the processing is again executed from step S4. After the processing from step S14 to step S18 is repeated a predetermined number of times, the execution of the flowchart ends.

In this manner, a solution to which variations are given is prepared as an input variable, and objective functions obtained by giving variations only once are used as evaluation values. In the course of generation evolution, solutions with low robustness are weeded out, and a highly robust solution that remains finally is calculated as an optimal solution.

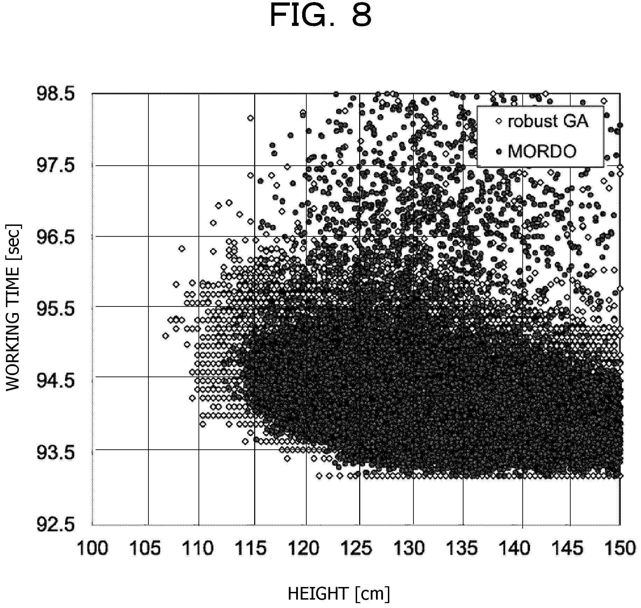

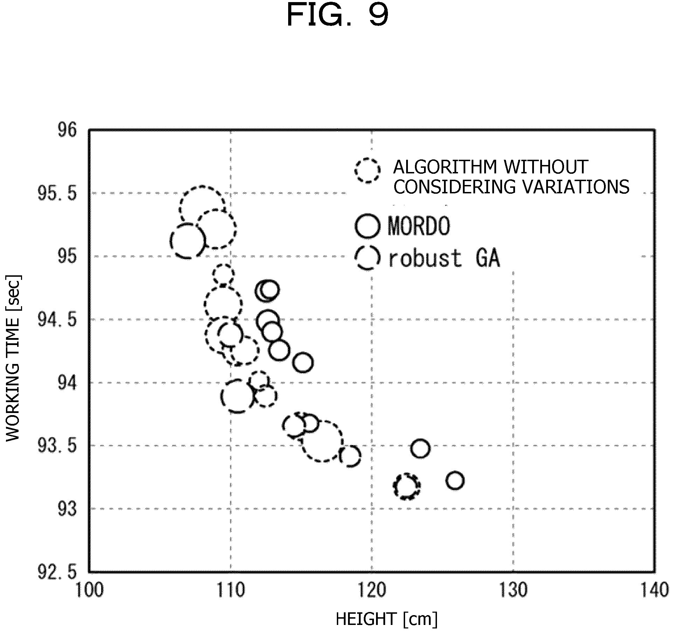

FIG. 8 is a diagram illustrating arithmetic results in the MORDO method and arithmetic results in the Robust GA. Each plot in FIG. 8 indicates an evaluation index value for each arrangement order. In the example of FIG. 8, a height formed by all boxed products and a working time are used as the evaluation index values. FIG. 9 is a diagram illustrating a result of representing variance of Pareto solutions by bubble sizes. In FIG. 9, the arithmetic results in the optimization algorithm of FIG. 6 are also represented. As illustrated in FIGs. 8 and 9, in the Robust GA method, highly robust Pareto solutions with a small variance of the solutions are obtained at positions similar to those of the optimization algorithm without considering variations. Note that, as compared with the MORDO method, the variance of the solutions is large and the robustness is low.

In the Robust GA method, since there is only one sampling point in the vicinity of an input variable, there is no calculation loss, and a large number of solutions may be evaluated. On the other hand, since an evaluation value of one sampling point greatly affects selection of a solution, a position of a Pareto solution calculated as an optimal solution tends to be overestimated.

Therefore, in the present embodiment, a Hybrid method in which a switch generation is set and the MORDO method and the Robust GA method are selectively used is adopted. Specifically, in younger generations whose number of generations is smaller than the number of switch generations, the Robust GA method is used to weed out solutions with low robustness while reducing a calculation cost. In generations whose number of generations exceeds the number of switch generations, the MORDO method that may obtain solutions with higher robustness is used.

In this manner, by switching from the Robust GA method to the MORDO method in the middle, it is possible to weed out solutions with low robustness that may have been overestimated in the Robust GA method. Therefore, it is possible to calculate a highly robust optimal solution in a practical time. Note that, when the MORDO method is used first and is switched to the Robust GA method from the middle, a final solution becomes a most elite solution, and thus the robustness is reduced.

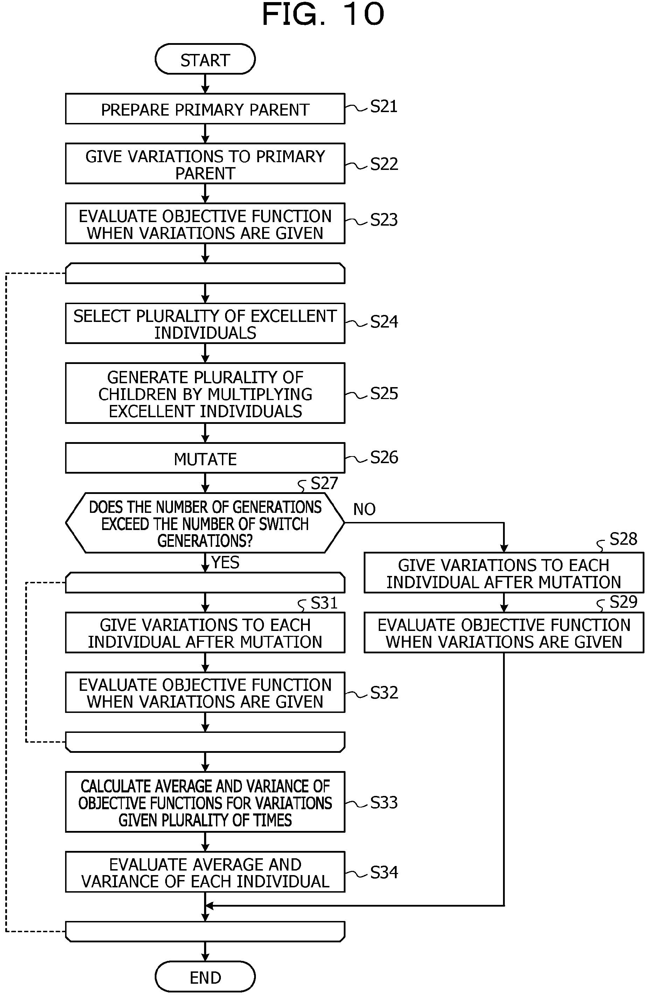

FIG. 10 is a flowchart representing an example of processing executed by the information processing device 100 according to the present embodiment. First, the first arithmetic unit 30 prepares a primary parent using a model of a packaging box and product information stored in the storage unit 10 (step S21).

Next, the first arithmetic unit 30 gives variations to the primary parent using the Gaussian noise or the like (step S22). For example, a plurality of types of variations is generated. For example, for a product shape of each piece of the product information stored in the storage unit 10, a size of 1% increase, a size of 2% increase, a size of 1% decrease, a size of 2% decrease, or the like is generated as each variation.

Next, the determination unit 50 evaluates an objective function of each individual corresponding to each variation when the variations are given to the primary parent (step S23). In other words, an objective function of a solution obtained for each variation is evaluated. For example, the determination unit 50 determines whether or not each individual is favorable by determining whether or not the objective function of each individual is equal to or greater than a threshold. In a case where there is a plurality of objective functions, the determination unit 50 determines whether or not each individual is favorable by determining whether or not each objective function is equal to or greater than the threshold. Alternatively, the determination unit 50 determines whether or not each individual is favorable by determining whether or not an arithmetic mean in a case where a weight is set to each objective function is equal to or greater than the threshold.

Next, the first arithmetic unit 30 selects a plurality of excellent individuals whose objective functions are favorable (step S24). Next, the first arithmetic unit 30 generates a plurality of children by multiplying the excellent individuals (step S25). Next, the first arithmetic unit 30 causes the plurality of children to be mutated (step S26). Next, the first arithmetic unit 30 determines whether or not the number of generations exceeds the number of switch generations (step S27).

In a case where it is determined as "No" in step S27, the first arithmetic unit 30 gives variations to each individual after the mutation using the Gaussian noise or the like (step S28). The variations in this case are similar to those in step S22. Next, the determination unit 50 evaluates an objective function of each individual corresponding to each variation when the variations are given to each individual after the mutation (step S29). For example, the evaluation similar to that in step S23 is performed. Thereafter, the processing from step S24 is repeated.

In a case where it is determined as "Yes" in step S27, the second arithmetic unit 40 gives variations to each individual after the mutation using the Gaussian noise or the like (step S31). The variations in this case are similar to those in step S22. Next, the determination unit 50 evaluates an objective function of each individual corresponding to each variation when the variations are given to each individual after the mutation (step S32). By executing steps S31 and S32 a plurality of times, it is possible to give variations to each individual the plurality of times. After steps S31 and S32 are executed the plurality of times, the second arithmetic unit 40 calculates an average value and variance of the objective functions of each individual for the variations given the plurality of times (step S33).

Next, the determination unit 50 evaluates the average value and the variance of each individual (step S34) . For example, the determination unit 50 determines whether or not the average value is equal to or greater than a threshold, and determines whether the variance is equal to or less than a threshold. Thereafter, the processing is again executed from step S24. After the processing from step S24 is repeated a predetermined number of times, the execution of the flowchart ends. Note that the output unit 60 outputs an obtained optimization result to the display device 105. As a result, the display device 105 displays the optimization result.

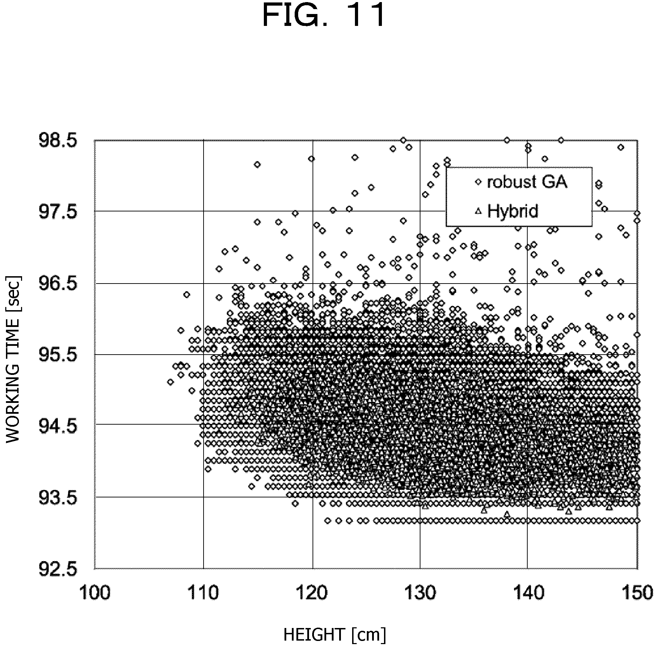

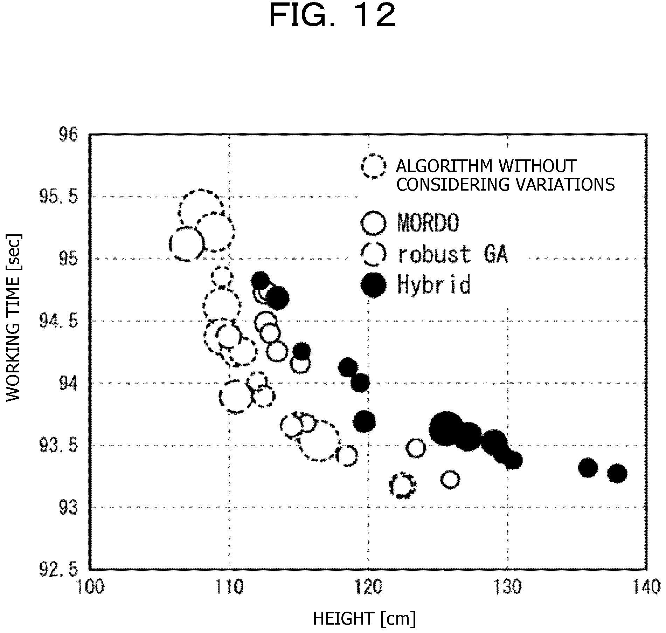

FIG. 11 is a diagram illustrating arithmetic results in the Robust GA method and arithmetic results in the Hybrid method according to the present embodiment. Each plot in FIG. 11 indicates an evaluation index value for each arrangement order. FIG. 12 is a diagram illustrating a result of representing variance of Pareto solutions by bubble sizes. In FIG. 12, the arithmetic results in the optimization algorithm without considering variations and the arithmetic results in the MORDO method in FIG. 6, and the arithmetic results in the Robust GA method in FIG. 9 are also represented. As illustrated in FIGs. 11 and 12, in the Hybrid method, a Pareto front is obtained at an almost similar position as that in the MORDO method. Moreover, compared with the Robust GA method, highly robust Pareto solutions with small variance of the solutions are obtained.

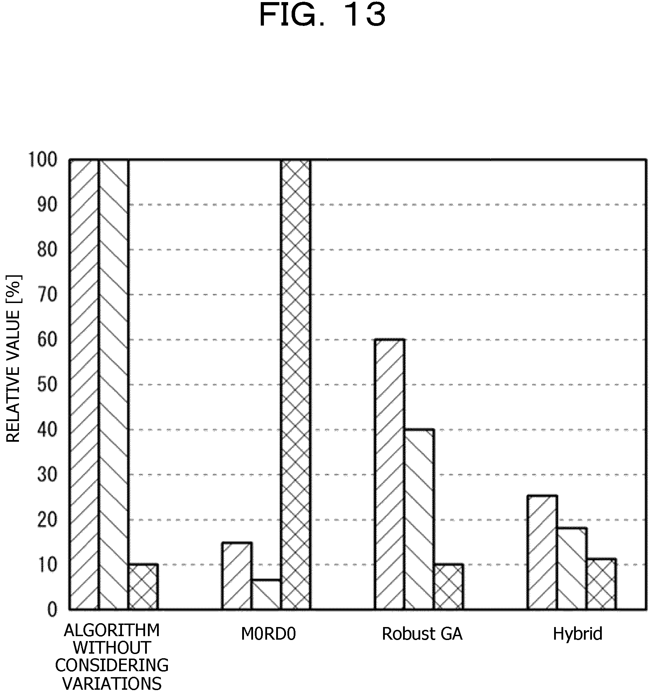

FIG. 13 is a diagram illustrating two types of test cases (a case 1 and a case 2) in which initial arrangement of boxing is changed. For each case, an arithmetic result by the optimization algorithm without considering variations, an arithmetic result by the MORDO method, an arithmetic result by the Robust GA method, and an arithmetic result by the Hybrid method according to the present embodiment are indicated. Furthermore, a calculation time of each optimization algorithm is indicated. Among three bar graphs, a left side indicates a result of the case 1, the middle indicates a result of the case 2, and a right side indicates the calculation time. In each case, display is performed by setting a maximum value by all the methods as 100% based on an average value of variance of a solution group forming a Pareto front. It may be seen that a calculation cost in the Hybrid method according to the present embodiment is slightly greater than that of the Robust GA method, but is greatly reduced as compared with that of the MORDO method. From the above, it may be seen that, in the present embodiment, a highly robust and highly effective optimal solution may be obtained while suppressing the calculation time, by repeating generation evolution by the Robust GA method and thereafter repeating generation evolution by the MORDO method.

Note that, in the present embodiment, the average value and the variance of the objective functions are evaluated, but other statistical values such as a median value and a standard deviation may be used.

### (Modification)

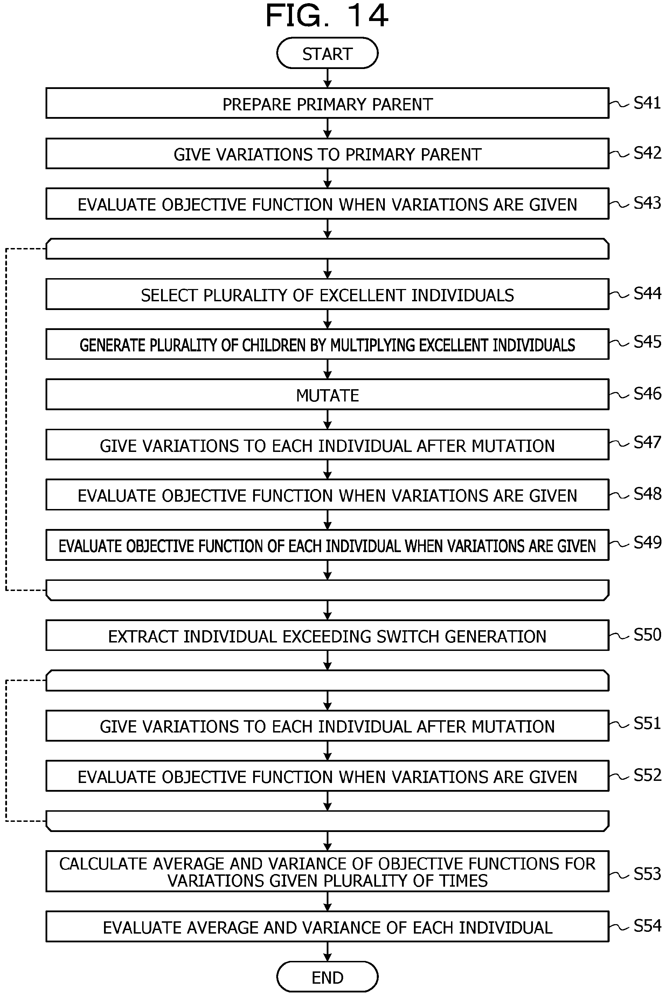

Subsequently, a modification will be described. As illustrated in FIG. 14, first, the first arithmetic unit 30 prepares a primary parent using a model of a packaging box and product information stored in the storage unit 10 (step S41). Next, the first arithmetic unit 30 gives variations to the primary parent using the Gaussian noise or the like (step S42). Next, the determination unit 50 evaluates an objective function of each individual corresponding to each variation when the variations are given to the primary parent (step S43).

Next, the first arithmetic unit 30 selects a plurality of excellent individuals whose objective functions are favorable (step S44). Next, the first arithmetic unit 30 generates a plurality of children by multiplying the excellent individuals (step S45). Next, the first arithmetic unit 30 causes the plurality of children to be mutated (step S46). Next, the first arithmetic unit 30 gives variations to each individual after the mutation using the Gaussian noise or the like (step S47). Next, the determination unit 50 evaluates an objective function of each individual corresponding to each variation when the variations are given to each individual after the mutation (step S48). Next, the determination unit 50 evaluates an objective function of each individual when the variations are given (step S49). Thereafter, the processing from step S44 is repeated. In this case, the number of repetitions is set to exceed the number of switch generations.

In a case where the number of repetitions from step S44 reaches a predetermined number exceeding the number of switch generations, after the execution of step S49, the second arithmetic unit 40 extracts a solution of a higher generation equal to or higher than a switch generation (step S50). Next, the second arithmetic unit 40 gives variations to each individual after the mutation using the Gaussian noise or the like (step S51). Next, the determination unit 50 evaluates an objective function of each individual corresponding to each variation when the variations are given to each individual after the mutation (step S52). Thereafter, the processing from step S51 is repeated.

In a case where the number of repetitions from step S51 reaches the predetermined number, after the execution of step S52, the second arithmetic unit 40 calculates an average value and variance of the objective functions for the variations given the predetermined number (step S53). Next, the determination unit 50 evaluates an objective function when the variations are given (step S54). For example, the determination unit 50 determines whether or not the average value is equal to or greater than a threshold, and determines whether the variance is equal to or less than a threshold. Thereafter, the execution of the flowchart ends. Note that the output unit 60 outputs an obtained optimization result to the display device 105. As a result, the display device 105 displays the optimization result.

It may be seen that, also in the present modification, a highly robust and highly effective optimal solution may be obtained while suppressing the calculation time, by repeating generation evolution by the Robust GA method and thereafter repeating generation evolution by the MORDO method for individuals after a predetermined generation.

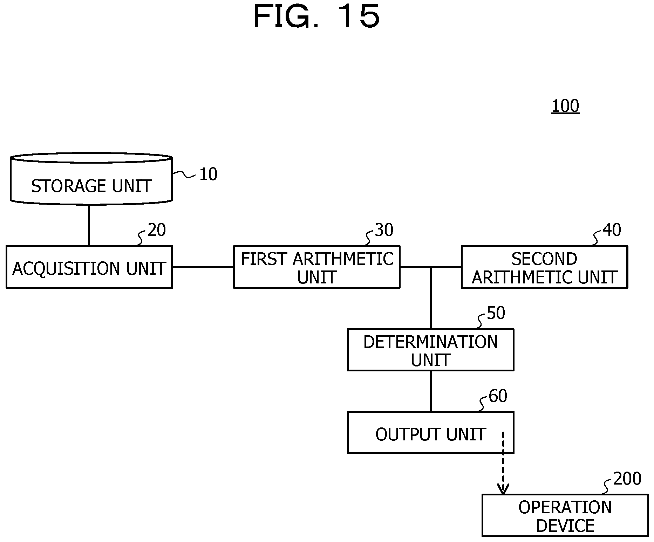

Note that, in each example described above, the result output by the output unit 60 is output to the display device 105, but may be output to an operation device 200. FIG. 15 is a block diagram illustrating this case. The operation device 200 is a robot that arranges objects to be boxed in a box in order in boxing work, and is a robot that inputs objects to be produced into a production line in order in the production line. As illustrated in FIG. 15, a result output by the output unit 60 is output to the operation device 200. The operation device 200 operates so that an optimal solution received from the output unit 60 is implemented. The operation device 200 includes a CPU, a RAM, a storage device, and the like. For example, a control program or the like for controlling an operation or the like of the operation device 200 is stored in the storage device, an optimal solution received from the output unit 60 is stored in the RAM, and the CPU controls the operation of the operation device 200 based on the control program and the optimal solution.

In each example described above, the first arithmetic unit 30 is an example of a first arithmetic unit that repeats generation evolution by a first optimization algorithm that causes generation evolution by a genetic algorithm such that an objective function satisfies a predetermined condition by giving variations to an input variable for each individual. The second arithmetic unit 40 is an example of a second arithmetic unit that repeats generation evolution by a second optimization algorithm that repeats to give variations to an input variable for an individual after a predetermined generation obtained by the first arithmetic unit to obtain an individual a plurality of times, and causes generation evolution by a genetic algorithm such that a statistical value of an objective function of each individual obtained satisfies a predetermined condition. The output unit 60 is an example of an output unit that outputs an individual obtained by repeating the processing by the second arithmetic unit to the display device.

While the embodiment of the present invention has been described above in detail, the present invention is not limited to such a particular embodiment, and a variety of modifications and alterations may be made within the scope of the gist of the present invention described in the claims.

### REFERENCE SIGNS LIST

- 10: Storage unit
- 20: Acquisition unit
- 30: First arithmetic unit
- 40: Second arithmetic unit
- 50: Determination unit
- 60: Output unit
- 100: Information processing device
- 105: Display device

## Claims

1. An arithmetic method executed by a computer, the arithmetic method comprising:
first processing of repeating generation evolution by a first optimization algorithm that causes generation evolution by a genetic algorithm such that an objective function satisfies a predetermined condition by giving variations to an input variable for each individual; and
second processing of repeating generation evolution by a second optimization algorithm that repeats to give variations to an input variable for each individual after a predetermined generation obtained by the first processing to obtain an individual a plurality of times, and causes generation evolution by a genetic algorithm such that a statistical value of an objective function of each individual obtained satisfies a predetermined condition.

2. The arithmetic method according to claim 1, wherein, in the second processing, for an individual of the predetermined generation, to give variations to an input variable to obtain an individual is repeated a plurality of times, and generation evolution is caused such that a statistical value of an objective function of each obtained individual satisfies a predetermined condition.

3. The arithmetic method according to claim 1, wherein,
in the first processing, generation evolution is repeated up to a generation that exceeds the predetermined generation, and
in the second processing, to extract an individual after the predetermined generation obtained by the second optimization algorithm and to give variations to an input variable for the extracted individual to obtain an individual is repeated a plurality of times, and generation evolution is caused such that a statistical value of an objective function of each obtained individual satisfies a predetermined condition.

4. The arithmetic method according to any one of claims 1 to 3, wherein an average value and variance are used as the statistical values.

5. The arithmetic method according to any one of claims 1 to 4, wherein the computer executes processing of causing a display device to display an individual obtained by repeating generation evolution in the second processing.

6. An arithmetic program for causing a computer to execut a processing of:
first processing of repeating generation evolution by a first optimization algorithm that causes generation evolution by a genetic algorithm such that an objective function satisfies a predetermined condition by giving variations to an input variable for each individual; and
second processing of repeating generation evolution by a second optimization algorithm that repeats to give variations to an input variable for each individual after a predetermined generation obtained by the first processing to obtain an individual a plurality of times, and causes generation evolution by a genetic algorithm such that a statistical value of an objective function of each individual obtained satisfies a predetermined condition.

7. The arithmetic program according to claim 6, wherein, in the second processing, for an individual of the predetermined generation, to give variations to an input variable to obtain an individual is repeated a plurality of times, and generation evolution is caused such that a statistical value of an objective function of each obtained individual satisfies a predetermined condition.

8. The arithmetic program according to claim 6, wherein,
in the first processing, generation evolution is repeated up to a generation that exceeds the predetermined generation, and
in the second processing, to extract an individual after the predetermined generation obtained by the second optimization algorithm and to give variations to an input variable for the extracted individual to obtain an individual is repeated a plurality of times, and generation evolution is caused such that a statistical value of an objective function of each obtained individual satisfies a predetermined condition.

9. The arithmetic program according to any one of claims 6 to 8, wherein an average value and variance are used as the statistical values.

10. The arithmetic program according to any one of claims 6 to 9, wherein the computer executes processing of causing a display device to display an individual obtained by repeating generation evolution in the second processing.

11. An information processing device comprising:
a first arithmetic unit configured to repeat generation evolution by a first optimization algorithm that causes generation evolution by a genetic algorithm such that an objective function satisfies a predetermined condition by giving variations to an input variable for each individual; and
a second arithmetic unit configured to repeat generation evolution by a second optimization algorithm that repeats to give variations to an input variable for each individual after a predetermined generation obtained by the first processing to obtain an individual a plurality of times, and cause generation evolution by a genetic algorithm such that a statistical value of an objective function of each individual obtained satisfies a predetermined condition.

12. The information processing device according to claim 11, wherein the second arithmetic unit repeats, for an individual of the predetermined generation, to give variations to an input variable to obtain an individual a plurality of times, and causes generation evolution such that a statistical value of an objective function of each obtained individual satisfies a predetermined condition.

13. The information processing device according to claim 11, wherein,
the first arithmetic unit repeats generation evolution up to a generation that exceeds the predetermined generation, and
the second arithmetic unit extracts an individual after the predetermined generation obtained by the second optimization algorithm, repeats to give variations to an input variable for the extracted individual to obtain an individual a plurality of times, and causes generation evolution such that a statistical value of an objective function of each obtained individual satisfies a predetermined condition.

14. The information processing device according to any one of claims 11 to 13, wherein an average value and variance are used as the statistical values.

15. The information processing device according to any one of claims 11 to 14, further comprising:
an output unit configured to cause a display device to display an individual obtained by repeating generation evolution by the second arithmetic unit.
